# EUROPÄISCHE PATENTSCHRIFT

(11) **EP 0 770 690 B1**
(45) Veröffentlichungstag und Bekanntmachung des Hinweises auf die Patenterteilung: **03.11.1999**
(21) Anmeldenummer: 96250198.7
(22) Anmeldetag: 11.09.1996
(51) Int. Cl.: C21C 5/56, C21C 5/52, F27D 3/00

(54) **Verfahren und Einrichtung zum Behandeln von Schrott-Reststoffen**
Process and installation for treating iron-scrap remainders
Procédé et dispositif pour traiter les résidus de ferrailles

(30) Priorität: 25.10.1995 DE 19541150
(43) Veröffentlichungstag der Anmeldung: 02.05.1997
(73) Patentinhaber: MANNESMANN Aktiengesellschaft, 40213 Düsseldorf (DE)
(72) Erfinder: Fuchs, Reinhard, Dr.-Ing., 41849 Wassenberg (DE); Feuerstacke, Ewald, Dipl.-Ing., 46282 Dorsten (DE)
(74) Vertreter: Meissner, Peter E., Dipl.-Ing.

(56) Entgegenhaltungen:
- EP-A- 0 451 323
- EP-A- 0 521 844
- WO-A-93/13228
- WO-A-94/10348
- DE-C- 4 407 861

## Beschreibung

Die Erfindung betrifft ein Verfahren zum Behandeln von energetisch verwendbaren Reststoffen, insbesondere Shredder-Leichtmüll, die verkleinert und klassiert in Bunkern gelagert werden sowie eine Einrichtung zur Durchführung des Verfahrens.

Bei der Aufbereitung von gebrauchten Konsumgütern wird angestrebt, eine möglichst kleine und in Bezug auf eine Deponierung unproblematische Rückstandsmenge übrig zu lassen. Hier besteht die Forderung, die Rückstandsmengen möglichst so aufzubereiten, daß zunehmend größere Rückstandsmengen verwertet werden können.

Besondere Anforderungen werden an die Verwertung von Altautos gestellt. Im Vergleich zur Aufbereitung von ausgedienten Maschinen und Anlagen aus Industrieabbrüchen, Schiffsabwrackungen sowie Schienen- und Eisenbahnmaterial, besitzen die Altautos einen besonders hohen Anteil an nichtmetallischen Stoffen wie Kunststoffe, Glas, Gummi, Textilien, Lacke, Öle, Fette, aber auch metallische Überzüge wie Zinn und Zink und metallische Nichteisenbeimengungen wie Kobalt, Kupfer, Chrom. In den üblichen Aufbereitungsaggregaten, nämlich Schere, Presse und Shredder, ist es möglich, gezielte Schüttdichten herzustellen.

Eine Möglichkeit, einen bestimmten Anteil von Leichtfraktionen an Shredder-Rückständen zu verarbeiten besteht darin, ein Kunststoff-Granulat herzustellen und dieses in einen Hochofen oder einen Kupolofen einzublasen. Hierzu ist es in aufwendiger Weise erforderlich, die Shredderrückstände-Leichtfraktion auf eine Körnung unter 4 mm aufzumahlen, die Kunststofffraktion abzutrennen und diese in dem Bereich der Blasformebene eines Hochofens bei Temperaturen von etwa 2000 °C einzublasen. Diese Vorgehensweise ist nicht nur kostspielig, sie kann auch nur einen relativ geringen Anteil an Reststoffen verwerten.

Die Erfindung hat sich das Ziel gesetzt, ein Verfahren und eine entsprechende Einrichtung zum Behandeln von Reststoffen zu schaffen, bei dem mit einfachen konstruktiven Mitteln kostengünstig und energiesparend gering aufbereitetes Material völlig verbrannt bzw. verschlackt wird.

Die Erfindung erreicht dieses Ziel durch die kennzeichnenden Merkmale des Verfahrensanspruches 1 sowie des Vorrichtungsanspruches 5.

Vorteilhafte Weiterbildungen der Erfindungen sind in den übrigen Ansprüchen dargelegt.

Erfindungsgemäß wird ohne das Erfordernis des Zerkleinerns in einer Klassierung, z.B. Windsichtung, Reststoff - beispielsweise Leichtmüll aus Shredder-Anlagen - in Bunkern gelagert und von diesen portionsweise einem Vorratstrog innerhalb eines Metallschmelzofens zugeführt. Hierbei ist die Korngröße und die Dichte des Reststoffes nur noch abhängig von seiner Analyse. So kann in einfacher Weise durch gezieltes Mischen des Reststoffes aus den verschiedenen Bunkern diese in gewünschter Zusammensetzung aufbereitet werden.

Mit dem o.g. Vorratstrog ist eine Schleuse verbunden, in die nach vorgebbarer Zeit der Reststoff eingebracht wird und in die nach Schließen der Schleusenein- oder ausgänge sauerstoffhaltiges Gas eingeblasen wird. Die Gasmenge und damit der Druck des sauerstoffhaltigen Gases wird so gesteuert, daß er sich höher einstellt als der im Schmelzofen befindliche Gasdruck. Anschließend wird die der Schmelze zugewandte Öffnung der Schleuse geöffnet und der Leichtmüll wird pneumatisch in den Ofenraum ausgefördert.

Wesentlich beschleunigt durch die pneumatische Förderung trifft der Leichtmüll auf die im Bodenbereich des Metallschmelzofens befindliche Metallschmelze und taucht in diese ein.

In einer vorteilhaften Ausgestaltung wird dem Reststoff Schrott zugemischt, der ein sicheres Nachrutschen bzw. Untertauchen des Reststoffes in das Bad und damit seine völlige Umsetzung in dieser Zone gewährleistet.

In einer weiteren Ausgestaltung der Erfindung werden seitlich im Chargierschacht Düsen angeordnet, die die Bewegungsrichtung des Leichtmülls bzw. des Materialgemisches unterstützen und gleichzeitig den zur Verbrennung erforderlichen Sauerstoff liefern.

Als Einrichtung zum Behandeln des Reststoffes wird ein Metallschmelzofen eingesetzt, der eine zentrisch angeordnete Elektrode aufweist und dessen Beschickungsraum in Form einer Hülse die Elektrode umgreift und der in dieser Form an sich aus der DE 4407861 C1 und der WO 94/10348 bekannt ist.
Erfindungsgemäß ist im Beschickungsraum eine sich vom Ofenkopf bis in Bodennähe erstreckende Kammer vorgesehen. Ein Teil der Kammer ist als Schleuse ausgebildet, die durch Absperrorgane verschließbar ist und die an eine Gasförderstation angeschlossen ist. In einer Ausgestaltung ist die Kammer als Rohr ausgebildet, wobei diese Kammer mindestens ein Segment des hülsenförmigen Beschickungsraumes bildet. In einer anderen Ausgestaltung ist die Kammer ein hülsenförmiges Rohr, das koaxial zur der die Elektrode umgebenden Hülse angeordnet ist.

Der vorgeschlagene Lichtbogenofen bildet ein geschlossenes System, bei dem sämtliche eingegebene Stoffe einschließlich der Reststoffe erfaßt werden. So werden insbesondere während des Prozeßes sich verflüchtigende oder gasförmige Verbindungen vollständig und damit die Umwelt nicht belastend erfaßt. Weiterhin wird hierbei durch die energetische Umsetzung der Reststoffe im Schmelzbereich elektrische Schmelzenergie eingespart.

Zur Erhöhung der Standzeiten der Kammerwandung wird vorgeschlagen, diese in dem dem Ofenboden zugeneigten Bereich als Kühlelement auszubilden.

In einer vorteilhaften Ausführung der Erfindung werden unterhalb der Schleusen, vorzugsweise in Badnähe, Lanzen zum Einblasen von Sauerstoff und/oder auch Brenner zur Einbringung von externer Heizenergie vorgesehen. Hierdurch wird die vollständige Verbrennung des Materials in dieser Zone gewährleistet. Die Gasbrenner sorgen für ein Freihalten dieser Zone von seitlich zugeführten Schrotteilen und für das Aufrechterhalten einer gewünschten Zonentemperatur.

Ein Beispiel der Erfindung ist in der beiliegenden Figur dargelegt.

Es zeigen die
- Figur 1: Einen Schnitt durch einen Elektrolichtbogenofen mit einer rohrförmigen Kammer im Beschickungsraum
- Figur 2: Einen Elektrolichtbogenofen mit einer hülsenförmigen Kammer im Beschickungsraum
- Figur 3: Die Draufsichten der Beschickungsraumformen

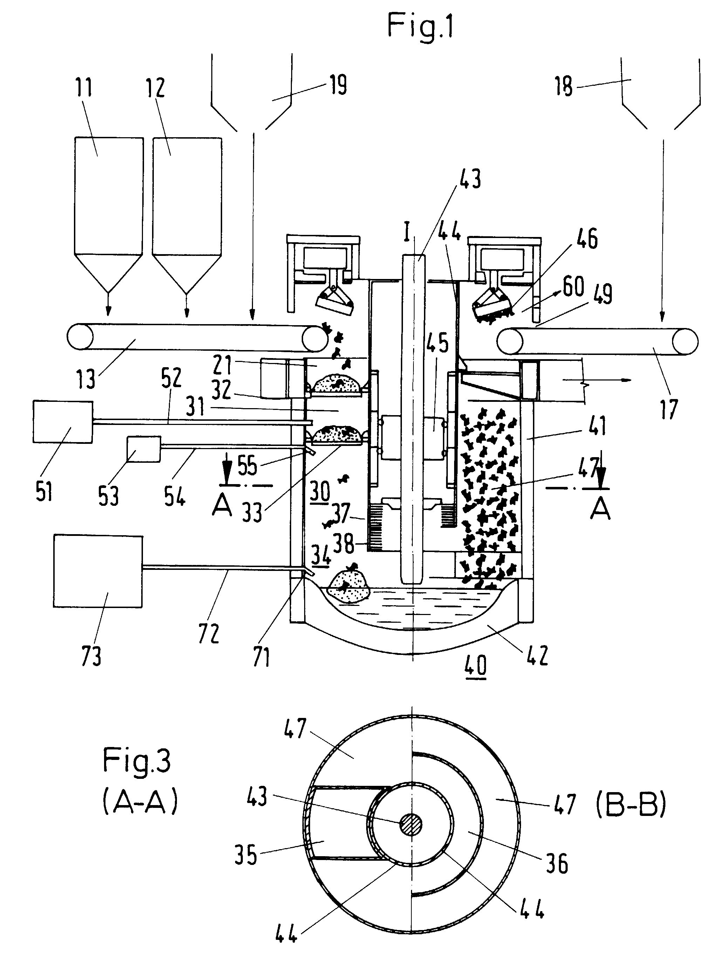

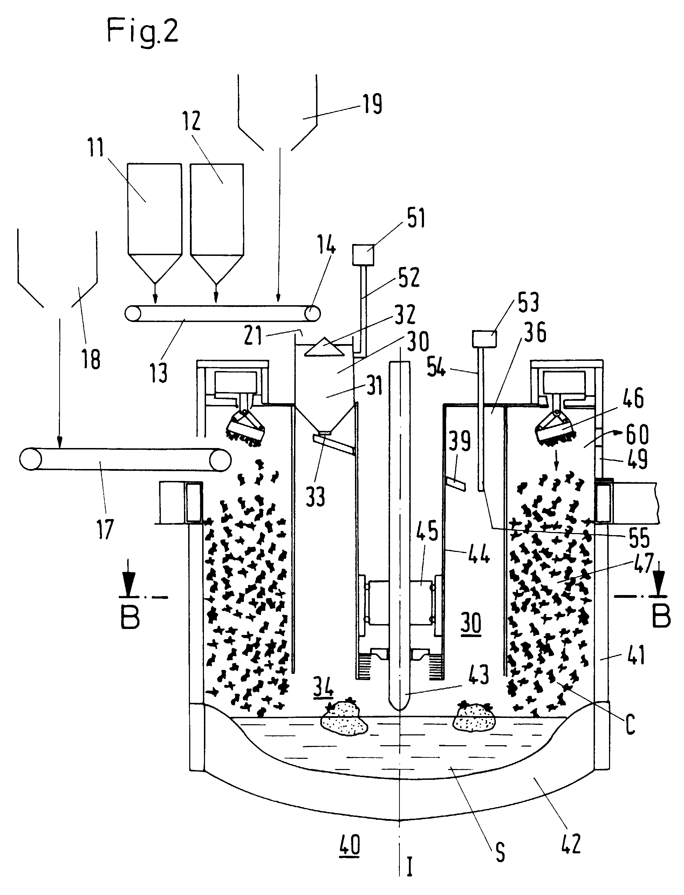

Die Figuren 1 und 2 zeigen die Bunker 11 und 12, aus denen Reststoff, z.B. Shredder-Leichtmüll auf ein Transportband 13 aufgebracht und zu einem Elektrolichtbogenofen 40 transportierbar ist. Auf das Transportband 13 ist aus einem Bunker 19 Schrott ergänzend aufbringbar.

Der Elektrolichtbogenofen 40 weist ein Ofengefäß 41 auf, in das eine von einer Elektrodenhülse 44 durch eine Elektrodenhalterung 45 gehaltene Elektrode 43 hineinragt. Im Bereich des Gefäßbodens 42 befindet sich die Schmelze S. Im Ofenkopf 49 ist eine Transportbahn 46 angeordnet. Im hülsenförmig ausgestalteten Beschickungsraum 47 befindet sich eine Charge C.

Weiterhin ist der Ofenkopf 49 mit einer nicht weiter dargestellten Gasreinigungsanlage 60 verbunden.

In der Figur 1 ist die Abwurfstelle des Transportbandes 13 unterhalb der ringförmigen Transportbahn 46 angeordnet und somit in vergleichbarer Weise aufgebaut wie die Schrottzufuhr aus einem Bunker 18 auf ein Transportband 17.

In der Figur 1 ist im hülsenförmigen Beschickungsraum 47 eine Kammer 30 vorgesehen, die als rohrförmiges Segment 35 ausgestaltet ist (vgl. dazu die Draufsicht in der Figur 3, linke Seite, Schnitt AA).

Der dem Transportband 13 zugeneigte Teil der Kammer 30 ist als Vorratstrog 21 ausgestaltet.

Der sich an den Vorratstrog 21 anschließende Teil der Kammer 30 ist als Schleuse 31 ausgestaltet, die am Materialeingang ein Absperrorgan 32 und am Materialausgang ein Absperrorgan 33 aufweist. In der Figur 1 sind die Absperrorgane 32, 33 als Klappen ausgebildet.

Die Schleuse 31 ist über eine Zuleitung 52 mit einer Gasförderstation 51, hier überwiegend Luft, verbunden.

In Materialförderrichtung nach der Schleuse 31 ragen in dem Kammerteil 34 Lanzen 55 hinein, die über eine Zuleitung 54 mit einer Gasfördereinrichtung 53, hier im wesentlichen Sauerstoff, verbunden sind.

Unterhalb der Schleuse 31 sind am Kammerausgang 30 im Beschickungsraum 34 Brenner 73 vorgesehen, die über eine Zuleitung 72 mit einer Brennstofförderstation 73 verbunden sind.

Die Wandung 37 des der Schleuse 31 nachgeordneten Kammerteils 34 ist mit Kühlkanälen 38 versehen, die mit einer nicht weiter dargestellten Kühleinrichtung in Verbindung steht.

Bei der Figur 2 ist die Abwurfstelle des Transportbandes 13 mit 14 bezeichnet. Konzentrisch zur Ofenachse I ist ein Vorratstrog 21 angeordnet, dessen Boden durch ein Absperrorgan 32, hier eine Glocke, verschießbar ist. Das Absperrorgan 32 ist Teil einer Schleuse 31, die am Materialausgang ein Absperrorgan 33 besitzt. Der Schleuse nachgeordnet ist eine Drehschurre 39, durch die der Leichtmüll einem hülsenförmig ausgestalteten Kammerteil 34 zuführbar ist.

In der Figur 2 ist die Kammer 30 aufgebaut aus einem zylindrischen Schleusenteil 31 und aus einem hülsenförmigen Kammerteil 34. Dabei ist die Schleuse 31 über eine Zuleitung 52 mit einer Gasförderstation 51, im wesentlichen für Luft, verbunden. In dem hülsenförmigen Kammerteil 34 ragt eine Lanze 55, die über eine Zuleitung 54 mit einer Gasförderstation 53, hier im wesentlichen Sauerstoff, verbunden ist.

Im rechten Teil der Figur 3 ist der hülsenförmige Kammerteil 36 dargestellt, der zwischen Elektrodenhülse 44 und dem hülsenförmigen Beschickungsraum 47 angeordnet ist.

### Positionsliste

### Bunkeranlage

- 11, 12: Bunker für Shredder-Leichtmüll
- 13: Transportband Leichtmüll
- 14: Abwurfstelle
- 17: Transportband Schrott
- 18, 19: Bunker für Schrott

### Bevorratung

- 21: Vorratstrog
- 30: Kammer
- 31: Schleuse
- 32: Absperrorgan Materialeingang
- 33: Absperrorgan Materialausgang
- 34: der Schleuse nachgeordneter Teil
- 35: Segment rohrförmig
- 36: Segment hülsenförmig
- 37: Wandung
- 38: Kühlelement
- 39: Drehschurre
- 40: Elektrolichtbogenofen
- 41: Ofengefäß
- 42: Gefäßboden
- 43: Elektrode
- 44: Elektrodenhülse
- 45: Elektrodenhalterung
- 46: Transportband
- 47: Beschickungsraum
- 49: Ofenkopf

### Gasförderung

- 51: Gasförderstation Luft
- 52: Zuleitung
- 53: Gasförderstation Sauerstoff
- 54: Zuleitung
- 55: Lanze
- 60: Gasreinigungsanlage

### Brennstoffförderung

- 71: Brenner
- 72: Zuleitung
- 73: Brennstoffförderstation
- S: Schmelze
- C: Charge
- I: Ofenachse

## Patentansprüche

1. Verfahren zum Behandeln von energetisch verwertbaren Reststoffen, wie Shredder-Leichtmüll, die verkleinert und klassiert in Bunkern gelagert werden, gekennzeichnet durch folgende Schritte:
a) der Reststoff wird von den Bunkern portionsweise einem Metallschmelzofen, zum Schmelzen von Stahl, zugeführt und in einem Vorratstrog bevorratet,
b) nach vorgegebener Zeit wird der Reststoff portionsweise in eine gasdicht verschließbare Schleuse eingebracht,
c) nach Verschließen der Schleuse wird der Reststoff mit einem sauerstoffhaltigen Gas, dessen Druck höher ist als der des aktuellen Druckes am Ofenkopf des Metallschmelzofens, beaufschlagt,
d) nach Erreichen eines vorgebbaren Druckes in der Schleuse und nach Öffnen eines dem Ofengefäßboden zugewandten Schleusenaustrittes wird der Reststoff pneumatisch in den Ofenraum ausgefördert und
e) in die sich im Bodenbereich des Metallschmelzofens befindliche Metallschmelze eingetaucht.

2. Verfahren nach Anspruch 1,
dadurch gekennzeichnet,
daß in den Reststoff nach Verlassen der Schleuse Sauerstoff eingeblasen wird.

3. Verfahren nach Anspruch 1,
dadurch gekennzeichnet,
daß der Bereich, in dem der Reststoff in die Metallschmelze eintaucht, durch Fremdenergie freigehalten wird.

4. Verfahren nach einem der o.g. Ansprüche,
dadurch gekennzeichnet,
daß während des Zuführens des Reststoffes diesem in Abhängigkeit seiner Menge und zu beliebigen Zeiten vorgebbar Schrott der üblichen Ofencharge zugemischt wird.

5. Verfahren nach Anspruch 1, dadurch gekennzeichnet,
daß die Reststoffe einem Elektrolichtbogenofen zugeführt werden.

6. Verfahren nach Anspruch 3, dadurch gekennzeichnet,
daß die Fremdenergie von einer Ölflamme stammt.

7. Einrichtung zum Behandeln von energetisch verwertbaren Reststoffen, insbesondere Shredder-Leichtmüll, mit Bunkern, in denen der Reststoff klassiert gelagert wird, mit einer Transporteinrichtung, die den Reststoff zu einem Elektrolichtbogenofen zum Schmelzen von Stahl fördert, wobei der Elektrolichtbogenofen einen Beschickungsraum in Form einer Hülse aufweist, der mindestens eine zentrisch angeordnete Elektrode umgreift, zur Durchführung des Verfahrens nach Anspruch 1,
dadurch gekennzeichnet,
daß in dem Beschickungsraum (47) eine vom Ofenkopf (49) bis in die Nähe des Boden (42) des Ofengefäßes (41) sich erstreckende Kammer (30) angeordnet ist,
daß ein Teil (31) der Kammer (30) als Schleuse ausgebildet ist, die in Chargierrichtung im Materialein- und ausgang Absperrorgane (32, 33) aufweist,
daß der als Schleuse (31) ausgebildete Teil der Kammer (30) an eine Gasförderstation angeschlossen ist, und
daß oberhalb der Kammer (30) ein Vorratstrog (21) vorgesehen ist.

8. Einrichtung nach Anspruch 7;
dadurch gekennzeichnet,
daß die Kammer (30) rohrförmig ausgestaltet ist und mindestens ein achsparallel zur Hauptachse (I) angeordnetes Segment (35) des Beschickungsraumes (47) bildet.

9. Einrichtung nach Anspruch 7,
dadurch gekennzeichnet,
daß der in Materialförderrichtung der Schleuse (31) nachgeordnete Teil (34) der Kammer (30) hülsenförmig ausgestaltet ist und koaxial zwischen der die Elektrode (43) umgebenden Hülse (44) und dem Beschickungsraum (47) angeordnet ist.

10. Einrichtung nach Anspruch 8 oder 9,
dadurch gekennzeichnet,
daß die Wandung (37) der Kammer (30) mindestens in dem dem Ofenboden (42) zugeneigten Bereich als Kühlelement (38) ausgebildet ist, das mit einer Kühlmittelförderstation in Verbindung steht.

11. Einrichtung nach Anspruch 10,
dadurch gekennzeichnet,
daß das Kühlelement (38) Kanäle (39) aufweist, durch die ein flüssiges Medium leitbar ist.

12. Einrichtung nach einem der o.g. Ansprüche 7 bis 11,
dadurch gekennzeichnet,
daß unterhalb der Schleuse (31) Lanzen (55) zum Einblasen von sauerstoffhaltigen Gasen vorgesehen sind.

13. Einrichtung nach einem der o.g. Ansprüche 7 bis 11,
dadurch gekennzeichnet,
daß unterhalb der Schleuse (31) am Kammerausgang (30) im Beschickungsraum (34) zur Einbringung von externer Heizenergie Brenner (71) vorgesehen sind, die über eine Zuleitung (72) mit einer Brennstoffförderstation (73) verbunden sind.

## Claims

1. A process for treating residual materials which can be re-used for energy purposes, such as light waste from shredders, which are comminuted and stored in bins in classified form, characterised by the following steps:
a) the residual material is fed batchwise from the bins to a metal melting furnace for melting steel, and are stored in a storage trough,
b) after a predetermined time the residual material is introduced batchwise into a lock which can be closed so that it is gas-tight,
c) once the lock has been closed, the residual material is acted upon by an oxygen-containing gas, the pressure of which is higher than that of the current pressure at the port end of the metal melting furnace,
d) once a presettable pressure has been reached in the lock, and once a lock exit facing the furnace vessel bottom has been opened, the residual material is conveyed out pneumatically into the furnace chamber, and
e) is dipped into the metal melt located in the bottom region of the metal melting furnace.

2. A process according to Claim 1, characterised in that oxygen is injected into the residual material after leaving the lock.

3. A process according to Claim 1, characterised in that the region in which the residual material dips into the metal melt is kept free by extraneous energy.

4. A process according to one of the above claims, characterised in that during the supplying of the residual material scrap of the conventional furnace charge is admixed thereto according to its quantity and at any desired times presettably.

5. A process according to Claim 1, characterised in that the residual materials are supplied to an electric arc furnace.

6. A process according to Claim 3, characterised in that the extraneous energy comes from an oil flame.

7. An apparatus for treating residual materials which can be re-used for energy purposes, in particular light waste from shredders, with bins in which the residual material is stored in classified form, having a transport means which conveys the residual material to an electric arc furnace for melting steel, the electric arc furnace having a charging space in the form of a sleeve which surrounds at least one centrally arranged electrode, for performing the process according to Claim 1,
characterised in that
a chamber (30) extending from the port end (49) into the vicinity of the bottom (42) of the furnace vessel (41) is arranged in the charging space (47),
one part (31) of the chamber (30) is in the form of a lock, which has shut-off elements (32, 33) in the direction of charging in the material inlet and outlet,
the part of the chamber (30) which is in the form of a lock (31) is connected to a gas conveying station, and
that a storage trough (21) is provided above the chamber (30).

8. An apparatus according to Claim 7, characterised in that the chamber (30) is tubular and forms at least one segment (35) of the charging space (47) which is arranged paraxially to the main axis (I).

9. An apparatus according to Claim 7, characterised in that the part (34) of the chamber (30) succeeding the lock (31) in the direction of conveyance of the material is in the form of a sleeve and is arranged coaxially between the sleeve (44) surrounding the electrode (43) and the charging space (47).

10. An apparatus according to Claim 8 or 9,
characterised in that the wall (37) of the chamber (30), at least in the region inclined towards the bottom (42) of the furnace, is designed as a cooling element (38) which is connected to a coolant conveying station.

11. An apparatus according to Claim 10, characterised in that the cooling element (38) has channels (39) through which a liquid medium can be passed.

12. An apparatus according to one of the above Claims 7 to 11, characterised in that lances (55) for injecting oxygen-containing gases are provided beneath the lock (31).

13. An apparatus according to one of the above Claims 7 to 11, characterised in that burners (71) are provided beneath the lock (31) at the chamber outlet (30) in the charging space (34) for introducing extraneous heating energy, which burners are connected to a fuel conveying station (73) via a feed line (72).

## Revendications

1. Procédé pour traiter des déchets énergétiquement récupérables, comme des ordures légères de shredder, qui sont stockés de façon réduite et classifiée dans des réservoirs,
caractérisé par les étapes suivantes :
a) des déchets sont amenés des réservoirs, par portion, à un four de fusion de métal, pour faire fondre l'acier, et sont stockés dans un bac de stockage,
b) après une durée prédéterminée, les déchets sont amenés, par portion, dans une écluse pouvant être fermée de façon étanche au gaz,
c) après la fermeture de l'écluse, les déchets sont soumis à un gaz comportant de l'oxygène, dont la pression est plus élevée que la pression actuelle à la tête du four de fusion de métal,
d) lorsqu'une pression prédéterminée est atteinte dans l'écluse et après l'ouverture d'une sortie d'écluse en regard du fond de la carcasse du four, les déchets sont transportés de façon pneumatique dans l'espace du four, et
e) sont plongés dans la fonte métallique se trouvant dans la zone de fond du four de fusion de métal.

2. Procédé selon la revendication 1,
caractérisé en ce que l'on insuffle de l'oxygène dans les déchets après la sortie de l'écluse.

3. Procédé selon la revendication 1,
caractérisé en ce que la zone, dans laquelle les déchets plongent dans la fonte métallique, est maintenue libre par de l'énergie externe.

4. Procédé selon l'une des revendications précédentes,
caractérisé en ce que, durant l'amenée des déchets, on mélange à ceux-ci, en fonction de leur quantité et à des instants choisis, de la ferraille de la charge usuelle du four.

5. Procédé selon la revendication 1,
caractérisé en ce que les déchets sont amenés à un four à arc électrique.

6. Procédé selon la revendication 3,
caractérisé en ce que l'énergie externe provient d'une flamme de fioul.

7. Dispositif pour traiter des déchets énergétiquement récupérables, en particulier des ordures légères de shredder, comportant des réservoirs, dans lesquels les déchets sont stockés de façon classifiée, un dispositif de transport qui transporte les déchets vers un four à arc électrique pour faire fondre l'acier, le four à arc électrique comportant un espace de chargement sous forme d'une douille qui entoure au moins une électrode agencée centralement, pour la mise en oeuvre du procédé selon la revendication 1,
caractérisé en ce qu'une chambre (30) s'étendant de la tête de four (49) jusqu'à proximité du fond (42) de la carcasse du four (41) est agencée dans l'espace de chargement (47), en ce qu'une partie (31) de la chambre (30) est réalisée sous forme d'écluse qui comporte dans le sens de chargement des organes de fermeture (32,33) à l'entrée et à la sortie du matériau, en ce que la partie de la chambre (30) réalisée sous forme d'écluse (31) est raccordée à un poste d'alimentation en gaz, et en ce que l'on prévoit un bac de stockage (21) au-dessus de la chambre (30).

8. Dispositif selon la revendication 7,
caractérisé en ce que la chambre (30) est réalisée sous forme de tube et forme au moins un segment (35) de l'espace de chargement (47), agencé parallèlement à l'axe principal (I).

9. Dispositif selon la revendication 7,
caractérisé en ce que la partie (34) de la chambre (30), agencée en aval de l'écluse (31) dans le sens de déplacement du matériau, est réalisée sous forme de douille et est agencée coaxialement entre la douille (44) entourant l'électrode (43) et l'espace de chargement (47).

10. Dispositif selon l'une des revendications 8 et 9,
caractérisé en ce que la paroi (37) de la chambre (30) est réalisée, au moins dans la zone en regard du fond du four (42), sous forme d'un élément de refroidissement (38) qui est relié à un poste d'alimentation en fluide de refroidissement.

11. Dispositif selon la revendication 10,
caractérisé en ce que l'élément de refroidissement (38) comporte des canaux à travers lesquels peut être guidé un fluide.

12. Dispositif selon l'une des revendications précédentes 7 à 11,
caractérisé en ce que l'on prévoit, au-dessous de l'écluse (31), des lances (55) pour insuffler des gaz comprenant de l'oxygène.

13. Dispositif selon l'une des revendications précédentes 7 à 11,
caractérisé en ce que l'on prévoit, au-dessous de l'écluse (31), à la sortie de la chambre (30), dans l'espace de chargement (34), des brûleurs (71) pour apporter de l'énergie de chauffage externe, brûleurs qui sont reliés par l'intermédiaire d'une liaison (72) à un poste d'alimentation en carburant (73).
